# EUROPÄISCHE PATENTSCHRIFT

(11) **EP 3 083 346 B1**
(45) Veröffentlichungstag und Bekanntmachung des Hinweises auf die Patenterteilung: **14.08.2019**
(21) Anmeldenummer: 14814773.9
(22) Anmeldetag: 16.12.2014
(51) Int. Cl.: B60T 1/10, B60T 8/88

(54) **KRAFTFAHRZEUG**
MOTOR VEHICLE
VÉHICULE AUTOMOBILE

(30) Priorität: 21.12.2013 DE 102013021872
(43) Veröffentlichungstag der Anmeldung: 26.10.2016
(73) Patentinhaber: Audi AG, 85045 Ingolstadt (DE)
(72) Erfinder: STEMMER, Martin, 85445 Niederding (DE)
(74) Vertreter: Reichert, Thomas Klaus
(86) Internationale Anmeldenummer: PCT/EP2014/003362
(87) Internationale Veröffentlichungsnummer: WO 2015/090557

(56) Entgegenhaltungen:
- DE-A1-102009 047 612
- DE-A1-102011 110 892
- US-A1- 2012 193 154

## Beschreibung

Die Erfindung betrifft ein Kraftfahrzeug umfassend mehrere Räder sowie ein Bremssystem mit jeweils einem Rad zugeordneten, hydraulisch betätigbaren Bremsen, wenigstens einen Bremskreis, über den die Bremsen betätigbar sind, einen Bremskraftverstärker, über den der Bremskreis bedienbar ist, wobei der Bremskraftverstärker über ein vom Fahrer zu betätigendes Bremspedal betätigbar ist, sowie wenigstens eine über eine Steuerungseinrichtung steuerbare Druckerzeugungs- und/oder Druckspeichereinrichtung, über die der hydraulische Druck innerhalb des Bremskreises modulierbar ist. Ein derartiges Kraftfahrzeug ist zum Beispiel in der DE 10 2009 047612 A1 offenbart.

Kraftfahrzeuge verfügen in der Regel über den jeweiligen Rädern zugeordnete Scheibenbremsen, wobei mitunter auch Trommelbremsen verbaut sind. Die Bremsen werden über einen hydraulischen Bremskreis betätigt, der wiederum über einen Bremskraftverstärker bedient wird, um den erforderlichen Hydraulikdruck zu erzeugen. Im Vorliegenden sind unter einem Bremskraftverstärker sowohl Bremsdruckerzeugungseinrichtungen ohne als auch mit Modulationsvorrichtungen, die zur Bereitstellung von ABS- und ESC-Funktionen dienen, zu verstehen. Der Bremskraftverstärker wiederum ist bei bekannten Fahrzeugen mit dem Bremspedal gekoppelt, wobei das Bremspedal üblicherweise Teil eines Fußhebelwerks ist, an dem zumindest noch ein Fahrpedal, gegebenenfalls ein Kupplungspedal, vorgesehen ist.

Derartige bekannte Bremssysteme sind heutzutage fail-safe ausgelegt. Dies bedeutet, dass bei Eintritt eines Fehlers im Bremssystem selbst oder einer Systemkomponente wie beispielsweise entsprechenden Stellelementen, innerhalb der Kommunikationsverbindung zu Steuergeräten etc. oder der Energieversorgung, in letzter Konsequenz das Bremssystem deaktiviert wird. Unter Bremssystem ist in diesem Zusammenhang die Bremskraftverstärkung und die Bremsregelung, üblicherweise mit den Hauptfunktionen ABS (Antiblockiersystem) und ESC (Electronic Stability Control) zu verstehen. Das heißt, dass diese Funktionen nicht mehr zur Verfügung stehen, mitunter auch die Bremskraftverstärkung nicht mehr richtig arbeitet. Der Fahrer dient hierbei als Rückfallebene. Er übernimmt im Fehlerfall die Aufgabe, durch eine erhöhte Kraft, die er über das Bremspedal einbringt, das Fahrzeug zu bremsen, mithin also den benötigten Bremsdruck aufzubauen. Der Fahrer muss das Fahrzeug selbständig stabilisieren und eine angepasste Fahrweise wählen, um es im Fehlerfall zu kontrollieren und zu bremsen. Das heißt, dass der Fahrer als Rückfallebene in das Sicherheitskonzept einbezogen ist.

Moderne Kraftfahrzeuge lassen bereits jetzt ein teilautonomes Fahren zu, also ein Fahren, bei dem der Fahrer zumindest zum Teil nicht mehr in die Fahrzeugführung eingebunden ist. Die Entwicklung geht dabei immer stärker in eine den Fahrer möglichst weitgehend entlastende Richtung hin zu einem pilotierten respektive weitgehend autonomen Fahren. Das heißt, dass das Fahrzeug respektive die entsprechende Steuerung selbsttätig in der Lage ist, das Fahrzeug längs- und querzuführen, ohne dass hierfür der Fahrer eingebunden ist. Dieser kann sich anderen Dingen widmen. Mit zunehmendem Umfang des pilotierten Fahrens steigen aber auch die Anforderungen an sicherheitsrelevante Fahrzeugsysteme, die dann nicht mehr "fail-safe" ausgelegt werden müssen, sondern "fail-operational", denn sie müssen in der Lage sein, zumindest für eine gewisse Überbrückungszeit, nämlich bis der Fahrer selbst wieder aktiv in den Fahrbetrieb eingebunden ist, das Fahrzeug autonom zu führen, selbst wenn ein Störfall gegeben ist. Das heißt, dass die "fail-operational"-Regelung so ausgestaltet werden muss, als wenn der Fahrer noch in vollem Umfang aktiv eingebunden wäre. Bisher bekannte Bremssystemarchitekturen jedoch lassen die Darstellung eines solchen "fail-operational"-Verhaltens nicht zu, da sie nach wie vor auf den Fahrer als Rückfallebene abstellen.

Der Erfindung liegt damit das Problem zugrunde, ein Kraftfahrzeug anzugeben, das bei einfach konzipierter Auslegung des Bremssystems einen "fail-operational"-Betrieb zulässt.

Zur Lösung dieses Problems ist bei einem Kraftfahrzeug der eingangs genannten Art erfindungsgemäß wenigstens ein Elektromotor vorgesehen, über den im Fall einer erfassten Fehlfunktion innerhalb des Bremssystems durch automatisches Schalten in einen generatorischen Betrieb ein Verzögerungsmoment zum Bremsen des Fahrzeugs in den Stillstand erzeugbar ist. Zusätzlich ist erfindungsgemäß ebenfalls eine elektromechanische Parkbremseinrichtung vorgesehen, die mit oder nach dem Umschalten des Elektromotors zur zusätzlichen Verzögerung automatisch zuschaltbar ist.

Wird bei dem erfindungsgemäßen Kraftfahrzeug eine wie auch immer geartete Fehlfunktion innerhalb des Bremssystems, die geeignet ist respektive dazu führt, dass dieses in Teilen oder insgesamt nicht korrekt arbeitet, erfasst, so wird, ohne dass der Fahrer hierzu eine wie auch immer geartete Aktivität entwickeln muss, über den Elektromotor ein Verzögerungsmoment erzeugt, das dazu dient, das Fahrzeug gezielt zu bremsen, und zwar bis maximal in den Stillstand. Hierzu wird der wenigstens eine Elektromotor in einen generatorischen Betrieb geschaltet, in welchem er als Generator arbeitet. Hierzu ist es erforderlich, den Elektromotor anzutreiben, wozu sein Rotor zu bewegen ist. Da der Elektromotor in irgendeiner Weise antriebs- oder fahrwerksseitig integriert ist, mithin also mit einem rotierenden Element verbunden ist, das sich bei rollendem Fahrzeug zwangsläufig dreht, wird folglich im generatorischen Betrieb durch die Rotation des Rotors ein Verzögerungsmoment erzeugt, das antriebs- oder fahrwerksseitig anliegt und so das Fahrzeug zwangsläufig bremst.
Die Umschaltung auf den generatorischen Betrieb und damit die Erzeugung des Verzögerungsmoments und daraus resultierend letztlich die Zwangsbremsung des Fahrzeugs findet automatisch statt, sobald eine entsprechende Fehlfunktion sensiert wurde. Der Fahrer, der im zumindest teilautonomen Betrieb die Kontrolle über das Fahrzeug im Moment nicht hat, muss hierfür nicht tätig werden, d. h., dass der Fahrer als Rückfallebene beim erfindungsgemäßen Kraftfahrzeug nicht vorgesehen ist. Vielmehr erfolgt die Umschaltung wie ausgeführt automatisch, woraus sich ein "fail operational"-Auslegung ergibt. Durch die automatisch erwirkte Verzögerung über den Elektromotor wird dem Fahrer, der im Falle der Erfassung einer Fehlfunktion natürlich zur Übernahme der Kontrolle über das Fahrzeug aufgefordert wird, hinreichend Zeit verschafft die Kontrolle zu übernehmen, während gleichzeitig das Fahrzeug automatisch und aktiv verzögert und maximal bis in den Stillstand gebremst wird. Die Auslegung ist dabei derart, dass das Fahrzeug in dieser Notfallsituation tatsächlich bis in den Stillstand verzögert werden kann.

In der Normalfunktion des Bremssystems im teilautonomen Betrieb kann das Bremssystem die Anforderungen der Assistenzsysteme, also beispielsweise zur Realisierung einer ABS-Funktion oder einer Antischlupfregelung, direkt umsetzen und, beispielsweise gesteuert über den ESC-Block, das Fahrzeug entsprechend verzögern. Das Fahrzeug wird durch einen Druckaufbau z. B. seitens der Pumpe des ESC-Blocks abgebremst. Das Bremssystem respektive die eingebundenen Komponenten sind dabei in der Lage, einen entsprechenden Funktionsfehler zu erfassen, beispielsweise über eine Statusmeldung oder eine Kommunikationsüberwachung etc. Ist ein solcher Fehlerfall erkannt, so wird automatisch in den "Notlauf" geschaltet, da das Bremssystem die an ihn gesetzten Aufgaben aufgrund der erfassten Fehlfunktion nicht mehr erfüllen kann. Es wird als unverzüglich der Elektromotor zugeschaltet respektive in einen generatorischen Betrieb geschaltet, so dass er das entsprechende Verzögerungsmoment erzeugt.

Der Elektromotor kann im Rahmen einer ersten Erfindungsalternative in den Antriebsstrang des Kraftfahrzeugs integriert sein und zum Antreiben des als Hybrid- oder Elektrofahrzeugs ausgebildeten Kraftfahrzeugs dienen. Bei dieser Erfindungsausgestaltung umfasst das Kraftfahrzeug also von Haus aus einen Elektromotor, der als Traktionsmotor dient und das Fahrzeug antreibt, sei es temporär im Falle eines Hybridfahrzeugs, sei es ausschließlich im Falle eines Elektrofahrzeugs. Dabei kann der Elektromotor auf beide Achsen, also Vorder- und Hinterachse wirken, oder nur auf eine Achse. Im Fehlerfall wird nun der Elektromotor gestützt auf dieses Fehlererfassungssignal über eine entsprechende Steuerungseinrichtung umgeschaltet, unabhängig davon, ob er momentan antreibend tätig ist oder in Ruhe ist.

Der Elektromotor kann wie beschrieben eine Achse antreiben, insbesondere die Vorderachse. Denkbar ist es aber auch, den Elektromotor als Radnabemotor auszuführen, wobei dann an wenigstens zwei Rädern ein entsprechender Radnabenmotor vorgesehen ist. In jedem Fall sind, unabhängig davon, wo nun der oder die Elektromotoren angeordnet sind, diese in den entsprechenden Antriebsstrang integriert.
Alternativ ist es denkbar, den Elektromotor nur als Verzögerungselement zu nutzen, ihn also nicht direkt in den Antriebsstrang zu integrieren respektive zumindest nicht in dem Sinne, dass er der Traktion dient. Der Elektromotor ist in diesem Fall einem Rad zugeordnet, wobei vorzugsweise zumindest zwei Rädern jeweils ein solcher Elektromotor zugeordnet ist, der das Verzögerungsmoment aufbaut.

Erfindungsgemäß ist eine elektromechanische Parkbremseinrichtung vorgesehen, welche in diesem Fehler- oder Notfall zur Fahrzeugverzögerung mit eingebunden werden kann. Erfindungsgemäß kann diese elektromechanische Parkbremseinrichtung mit oder nach dem Umschalten des Elektromotors zur zusätzlichen Verzögerung automatisch zugeschaltet werden. Eine solche elektromechanische Parkbremse wirkt zumeist auf die beiden Hinterräder. Sie ist unabhängig vom Bremssystem und funktioniert über separat ansteuerbare Aktoren, die entweder die dortigen Bremsen als solche betätigen, oder zusätzliche Bremselemente bedienen. Vor allem wenn der Elektromotor die Vorderachse antreibt, ist eine zusätzliche Verzögerung der Hinterräder zweckmäßig, aber natürlich auch in allen anderen einleitend beschriebenen Fällen. Denkbar ist es, nachdem mit der elektromechanischen Parkbremseinrichtung ein separates System integriert wird, das eine eigene Steuerungseinrichtung aufweist, seitens dieser Steuerungseinrichtung redundant den etwaigen Fehlerfall zu erfassen respektive die entsprechenden Steuerparameter zu berechnen, um daraufhin die Parkbremseinrichtung anzusteuern. Alternativ ist es natürlich denkbar, über die Steuerungseinrichtung, die den Elektromotor steuert, auch die Parkbremseinrichtung in diesem Fall anzusteuern.
Schließlich ist es zweckmäßig, wenn über eine elektronische Parkbremseinrichtung oder eine Getriebesperre nach Erreichen des Stillstands des Fahrzeugs das Fahrzeug in diesem Zustand automatisch gehalten wird, d. h., dass entweder die Parkbremseinrichtung oder die Getriebesperre nach Erreichen des Stillstands automatisch zugeschaltet wird.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig.1: eine Prinzipdarstellung eines erfindungsgemäßen Kraftfahrzeugs einer ersten Ausführungsform, wobei lediglich relevante Elemente gezeigt sind, und
- Fig.2: eine Prinzipdarstellung eines erfindungsgemäßen Kraftfahrzeugs einer zweiten Ausführungsform.

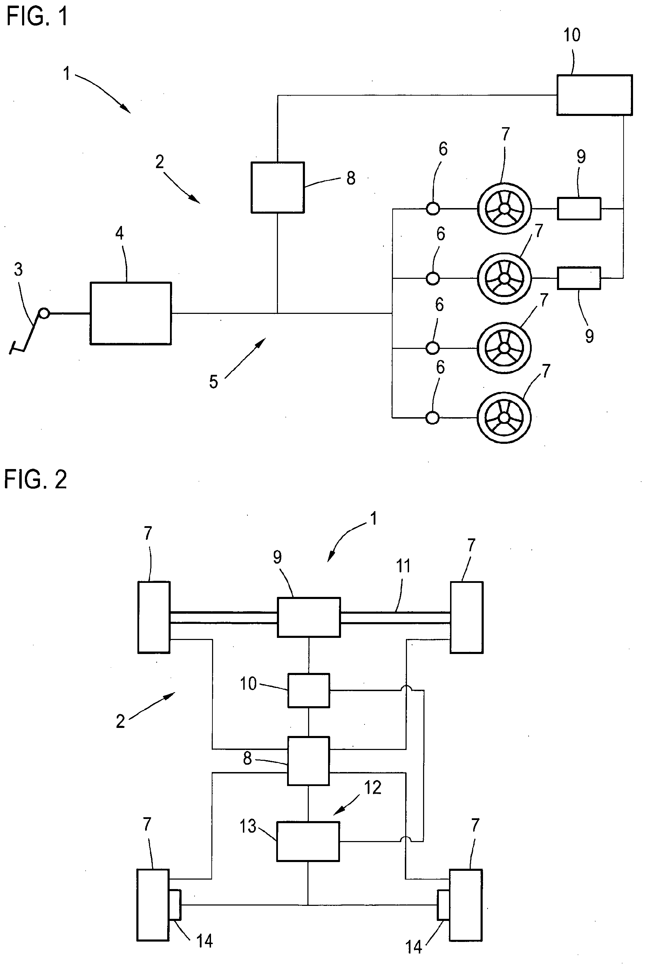

Fig. 1 zeigt in Form einer Prinzipdarstellung ein erfindungsgemäßes Kraftfahrzeug 1, von dem lediglich das Bremssystem 2 dargestellt ist, umfassend ein Bremspedal 3, das vom Fahrer zu bedienen ist, und das auf einem Bremskraftverstärker 4 wirkt. Dieser bedient einen hydraulischen Bremskreis 5, über den wiederum die einzelnen Bremsen 6, von denen jeweils eine einem Rad 7 zugeordnet ist, bedient werden. Die Bremsen 6 sind beispielsweise als Scheiben- oder Trommelbremsen ausgeführt.

Teil des Bremssystems 2 ist ferner eine Druckerzeugungs- und/oder Druckspeichereinrichtung 8, vornehmlich in Form eines ESC-Blocks. Ein solcher ESC-Block umfasst in an sich bekannter Weise einen Ventilblock mit einer Vielzahl separat schaltbarer Ventile, die zu den entsprechenden Bremsleitungen führen. Ferner ist eine Pumpeinrichtung vorgesehen, über die der Druck der Hydraulikflüssigkeit, die im Bremssystem respektive im Bremskreis 5 über die Ventile verteilt wird, variiert wird, sowie eine entsprechende Steuerungseinrichtung, die die Ventile und die Pumpe steuert. Der Aufbau und die Funktion eines solchen ESC-Blocks ist bekannt. Wenngleich im Vorliegenden nur ein Bremskreis 5 vorgesehen ist, sind bekanntlich üblicherweise zwei solcher Bremskreise redundant vorgesehen. Die Figur ist lediglich eine reine Prinzipdarstellung, die nur der Beschreibung der erfindungsgemäßen Grundfunktionalität dient.

Im gezeigten Ausführungsbeispiel sind an zwei der Räder 7, beispielsweise den Vorderrädern, zwei Elektromotoren 9 vorgesehen, die beide über eine gemeinsame Steuerungseinrichtung 10 angesteuert werden können. Bei den Elektromotoren 9 handelt es sich beispielsweise um Radnabenmotoren, die bei dem hier als Elektrofahrzeug ausgeführten Fahrzeug der Traktion dienen.

Die Steuerungseinrichtung 10 kommuniziert mit der Druckerzeugungs- und/oder Druckspeichereinrichtung 8, also dem ESC-Block respektive dessen Steuerungseinrichtung. Selbstverständlich kann die Steuerungseinrichtung 10 auch noch mit weiteren Elementen des Bremssystems 2 kommunizieren und insbesondere auch etwaige Kommunikationsstrecken überwachen.

Sobald entweder seitens des ESC-Blocks 8 oder der Steuerungseinrichtung 10 in irgendeiner Weise eine Fehlfunktion einer der Komponenten des Bremssystems 2 oder, im Falle des ESC-Blocks 8, einer seiner Komponenten wie beispielsweise eines Ventils oder dergleichen erfasst wird, so erfolgt umgehend über die Steuerungseinrichtung 10, der dieses entsprechende Fehlersignal gegeben wird, eine Ansteuerung der beiden Elektromotoren 9, so dass diese umgehend in einen generatorischen Betrieb umgeschaltet werden. In diesem generatorischen Betrieb legen die Elektromotoren 9 ein Verzögerungsmoment an, das zum Bremsen des Fahrzeugs 1 führt. Das Fahrzeug 1 kann dabei bis in den Stand gebremst werden. Irgendeine Interaktion des Fahrers ist hierzu nicht erforderlich, vielmehr schaltet das System von selbst auf diesen Nothalt- oder Notlaufzustand um und verzögert das bis dahin teilautonom geführte Fahrzeug. Der Fahrer erhält eine Übernachaufforderung, die ihn auffordert, die Fahrzeugkontrolle wieder zu übernehmen. Über diese automatisch induzierte Verzögerung über die generatorisch geschalteten Elektromotoren 9 wird dem Fahrer hinreichend Zeit verschafft, die Übernahme vorzunehmen, gleichwohl wird gleichzeitig das Fahrzeug aktiv verzögert, um den "fail-operational"-Betrieb sicherzustellen.

Fig. 2 zeigt eine Prinzipdarstellung eines erfindungsgemäßen Kraftfahrzeugs 1, wobei für gleiche Bauteile gleiche Bezugszeichen verwendet werden. Das Kraftfahrzeug 1 weist wiederum ein Bremssystem 2 auf, wobei im vorliegenden Fall der Übersichtlichkeit halber das Bremspedal 3 und der Bremskraftverstärker 4 nicht gezeigt sind, sondern lediglich die erste Druckerzeugungs- und/oder Druckspeichereinheit 8, also der ESC-Block sowie die vier Räder 7 mit ihren ebenfalls nicht gezeigten zugeordneten Bremsen 6.

Vorgesehen ist wiederum ein Elektromotor 9, der hier als Traktionsmotor an der Vorderachse 11 angeordnet ist und diese antreibt. Ihm zugeordnet ist wiederum eine Steuerungseinrichtung 10, die mit dem ESC-Block 8 kommuniziert. Kommt es wiederum zu einer Erfassung einer Fehlfunktion, so wird umgehend über die Steuerungseinrichtung 10 der Elektromotor 9, wenn zuvor ein zumindest teilautonomes Fahren vom Fahrer angewählt wurde, in den generatorischen Betrieb geschaltet, so dass er das Verzögerungsmoment erzeugt und das Fahrzeug definiert verzögert. Dabei kann die Steuerungseinrichtung 10 den Elektromotor 9 gegebenenfalls so steuern, dass das Verzögerungsmoment ebenfalls definiert aufgebaut wird respektive in seiner Höhe variiert wird, um ein zügiges, jedoch nicht allzu abruptes Bremsen zu ermöglichen.

Vorgesehen ist des Weiteren eine elektronische Parkbremseinrichtung 12 umfassend eine Steuerungseinrichtung 13 sowie im gezeigten Beispiel den beiden Hinterrädern 7 zugeordnete Bremsmittel 14, jeweils umfassend mindestens einen Aktor, der über die Steuerungseinrichtung 13 angesteuert wird, und beispielsweise auf die Bremse 6 wirkt oder ein eigenes Bremselement ansteuert. Die Steuerungseinrichtung 10 kommuniziert mit der Steuerungseinrichtung 13. Wird bei Erfassung eines wie auch immer gearteten Fehlers innerhalb des Bremssystems 2 der Elektromotor 9 auf generatorischen Verzögerungsbetrieb umgeschaltet, so wird von der Steuerungseinrichtung 10 gleichzeitig ein Signal an die Steuerungseinrichtung 13 gegeben, die daraufhin zusätzlich die Bremseinrichtungen 14 ansteuert und aktiviert, so dass folglich nicht nur über den Elektromotor 9 verzögert wird, sondern auch über die Parkbremseinrichtung 12. Das Fahrzeug kann also zügiger heruntergebremst werden.

Über die Parkbremseinrichtung 12 ist es auch möglich, das Fahrzeug, wenn es in den Stillstand gebremst ist, in dieser Situation zu halten. Alternativ könnte, wenn es sich bei dem Kraftfahrzeug 1 um ein Hybridfahrzeug handelt, das zusätzlich einen Verbrennungsmotor mit entsprechendem Getriebe umfasst, eine Getriebesperre eingelegt werden.

Wenngleich es grundsätzlich möglich ist, über die in den Fig. 1 und 2 lediglich exemplarisch gezeigten Beispiele das Fahrzeug, vom zumindest teilautonomen Fahren ohne Fahrerinteraktion kommend, in den Stillstand zu bremsen, ist es natürlich auch denkbar, die "Notlaufsituation", in der der eine oder die mehreren Elektromotoren in den generatorischen Verzögerungsbetrieb geschaltet sind, wieder zu beenden, wenn der Fahrer auf die ihm mit Erfassen der Fehlfunktion gegebene Übernahmeaufforderung, die an einem entsprechenden Display oder akustisch ausgegeben wird, die Kontrolle über das Fahrzeug wieder übernommen hat und folglich aktiv entweder lenkend oder bremsend eingreift. Da es sich jedoch um eine Fehlfunktionssituation handelt, ist es zweckmäßig, auch in diesem Fall die zusätzliche Verzögerung über die Elektromotoren, gegebenenfalls über die zugeschaltete Parkbremseinrichtung, beizubehalten. Mit dem Bremsen in den Stillstand wird gegebenenfalls auch ein etwaiges vorhandenes Getriebe automatisch in die Neutralstufe geschaltet.

## Patentansprüche

1. Kraftfahrzeug (1) umfassend mehrere Räder (7) sowie ein Bremssystem (2) mit jeweils einem Rad zugeordneten, hydraulisch betätigbaren Bremsen (6), wenigstens einen Bremskreis, über den die Bremsen betätigbar sind, einen Bremskraftverstärker (4), über den der Bremskreis bedienbar ist, wobei der Bremskraftverstärker über ein vom Fahrer zu betätigendes Bremspedal (3) betätigbar ist, sowie wenigstens eine über eine Steuerungseinrichtung steuerbare Druckerzeugungs- und/oder Druckspeichereinrichtung (8), über die der hydraulische Druck innerhalb des Bremskreises modulierbar ist,
**dadurch gekennzeichnet,**
**dass** das Kraftfahrzeug für einen zumindest teilautonomen Betriebsmodus mit selbsttätiger Längs- und Querführung ausgebildet ist, und dass wenigstens ein Elektromotor (9) vorgesehen ist, über den im Fall einer im teilautonomen Betriebsmodus erfassten Fehlfunktion innerhalb des Bremssystems (2) durch automatisches Schalten in einen generatorischen Betrieb ein Verzögerungsmoment zum Bremsen des Fahrzeugs (1) in den Stillstand erzeugbar ist, wobei eine elektromechanische Parkbremseinrichtung (12) vorgesehen ist, die mit oder nach dem Umschalten des Elektromotors (9) zur zusätzlichen Verzögerung automatisch zuschaltbar ist.

2. Kraftfahrzeug nach Anspruch 1,
**dadurch gekennzeichnet,**
**dass** der Elektromotor (9) in den Antriebsstrang des Kraftfahrzeugs (1) integriert ist und zum Antreiben des als Hybrid- oder Elektrofahrzeugs ausgebildeten Kraftfahrzeugs (1) dient.

3. Kraftfahrzeug nach Anspruch 2,
**dadurch gekennzeichnet,**
**dass** an wenigstens zwei Rädern (7) jeweils ein als Radnabenmotor ausgeführter Elektromotor (9) vorgesehen ist.

4. Kraftfahrzeug nach Anspruch 2,
**dadurch gekennzeichnet,**
**dass** der Elektromotor (9) eine Achse (11), insbesondere die Vorderachse des Kraftfahrzeugs (1) antreibt.

5. Kraftfahrzeug nach Anspruch 1,
**dadurch gekennzeichnet,**
**dass** der Elektromotor (9) einem Rad (7) zugeordnet ist.

6. Kraftfahrzeug nach Anspruch 5,
**dadurch gekennzeichnet,**
**dass** zumindest zwei Rädern (7) jeweils ein Elektromotor (9) zugeordnet ist.

7. Kraftfahrzeug nach einem der vorangehenden Ansprüche,
**dadurch gekennzeichnet,**
**dass** die elektromechanische Parkbremseinrichtung (12) oder eine Getriebesperre nach Erreichen des Stillstands des Fahrzeugs (1) zum Halten des Fahrzeugs (1) in Stand automatisch zuschaltbar ist.

## Claims

1. Motor vehicle (1) comprising a plurality of wheels (7); and a brake system (2) having hydraulically actuatable brakes (6) corresponding to each wheel; at least one brake circuit, via which the brakes can be actuated; a brake booster (4), via which the brake circuit can be operated, said brake booster being actuatable via a brake pedal (3) to be actuated by the driver, and at least one pressure generation device and/or pressure accumulator device (8), which can be controlled by a control device, and via which the hydraulic pressure inside the brake circuit can be modulated,
**characterised in that**
the motor vehicle is designed for an at least partially autonomous operating mode with automatic longitudinal and lateral guidance, and that at least one electric motor (9) is provided, which motor is used in the event of a failure inside the brake system (2) detected in the partially autonomous operating mode to generate a deceleration torque by automatically switching into a generator operation, in order to brake the vehicle (1) until same has reached a standstill, whereby an electromechanical parking-brake device (12) is provided, which can be engaged automatically with or after the switching of the electric motor (9) for additional deceleration.

2. Motor vehicle according to claim 1,
**characterised in that**
the electric motor (9) is integrated into the drive train of the motor vehicle (1) and serves to drive the motor vehicle (1), which is designed as hybrid vehicle or electric vehicle.

3. Motor vehicle according to claim 2,
**characterised in that**
an electric motor (9), designed as wheel hub motor, is provided on each of at least two wheels (7).

4. Motor vehicle according to claim 2,
**characterised in that**
the electric motor (9) drives an axle (11), in particular the front axle of the motor vehicle (1).

5. Motor vehicle according to claim 1,
**characterised in that**
the electric motor (9) is assigned to one wheel (7).

6. Motor vehicle according to claim 5,
**characterised in that**
an electric motor (9) is assigned to each of at least two wheels (7).

7. Motor vehicle according to any of the preceding claims,
**characterised in that**
the electromechanical parking-brake device (12) or a transmission lock can be engaged automatically to hold the vehicle (1) in position, after the motor vehicle (1) has been brought to a standstill.

## Revendications

1. Véhicule automobile (1) comprenant plusieurs roues (7) ainsi qu'un système de freinage (2) avec des freins (6) actionnables hydrauliquement associés respectivement à une roue, au moins un circuit de freinage, par le biais duquel les freins sont actionnables, un servofrein (4), par le biais duquel le circuit de freinage peut être commandé, dans lequel le servofrein est actionnable par le biais d'une pédale de frein (3) à actionner par le conducteur, ainsi qu'au moins un dispositif de génération de pression et/ou d'accumulation de pression (8) pouvant être commandé par le biais d'un dispositif de commande, par le biais duquel la pression hydraulique est modulable à l'intérieur du circuit de freinage,
**caractérisé en ce**
**que** le véhicule automobile est réalisé pour un mode de fonctionnement au moins partiellement autonome avec guidage longitudinal et transversal autonome, et qu'au moins un moteur électrique (9) est prévu, par le biais duquel dans le cas d'un dysfonctionnement détecté dans le mode de fonctionnement partiellement autonome à l'intérieur du système de freinage (2) par commutation automatique dans un mode de génération, un couple de temporisation peut être généré pour le freinage du véhicule (1) jusqu'à l'immobilisation, dans lequel un dispositif de frein de stationnement électromécanique (12) est prévu, qui peut être enclenché automatiquement avec ou après la commutation du moteur électrique (9) pour la temporisation supplémentaire.

2. Véhicule automobile selon la revendication 1,
**caractérisé en ce**
**que** le moteur électrique (9) est intégré dans la chaîne cinématique du véhicule automobile (1) et sert à l'entraînement du véhicule automobile (1) réalisé en tant que véhicule hybride ou électrique.

3. Véhicule automobile selon la revendication 2,
**caractérisé en ce**
**que** respectivement un moteur électrique (9) réalisé en tant que moteur-roue est prévu au niveau d'au moins deux roues (7).

4. Véhicule automobile selon la revendication 2,
**caractérisé en ce**
**que** le moteur électrique (9) entraîne un essieu (11), en particulier l'essieu avant du véhicule automobile (1).

5. Véhicule automobile selon la revendication 1,
**caractérisé en ce**
**que** le moteur électrique (9) est associé à une roue (7).

6. Véhicule automobile selon la revendication 5,
**caractérisé en ce**
**que** respectivement un moteur électrique (9) est associé à au moins deux roues (7).

7. Véhicule automobile selon l'une quelconque des revendications précédentes,
**caractérisé en ce**
**que** le dispositif de frein de stationnement électromécanique (12) ou un verrouillage de transmission peut être enclenché automatiquement après l'atteinte de l'immobilisation du véhicule (1) pour maintenir le véhicule (1) en état.
